Europäisches Patentamt

European Patent Office

Office européen des brevets

(19)

(11) Numéro de publication : **0 359 663 B1**

(12) **FASCICULE DE BREVET EUROPEEN**

(45) Date de publication du fascicule du brevet :
**17.03.93 Bulletin 93/11**

(51) Int. Cl.⁵ : **B64F 1/18, B64D 45/08, G05D 1/06, G01S 5/16**

(21) Numéro de dépôt : **89402501.4**

(22) Date de dépôt : **13.09.89**

(54) **Système d'aide à l'appontage d'aéronefs à vol stationnaire sur plate-forme de navire.**

(30) Priorité : **14.09.88 FR 8811962**

(43) Date de publication de la demande :
**21.03.90 Bulletin 90/12**

(45) Mention de la délivrance du brevet :
**17.03.93 Bulletin 93/11**

(84) Etats contractants désignés :
**DE GB IT**

(56) Documents cités :
**EP-A- 0 015 199
FR-A- 1 605 307
FR-A- 2 569 838
REVIEW OF SCIENTIFIC INSTRUMENTS, vol.
57, no. 6, juin 1986, pages 1207-1208, American
Institute of Physics, New York, US; H. KATO et
al.: "Photoelectric inclination sensor"**

(73) Titulaire : **SAT (SOCIETE ANONYME DE
TELECOMMUNICATIONS) Société Anonyme
française
41, rue Cantagrel
F-75631 Paris Cédex 13 (FR)**

(72) Inventeur : **Sutour, Laurent
104 avenue Victor Hugo
92170 Vanves (FR)**

(74) Mandataire : **Bloch, Gérard et al
2, square de l'Avenue du Bois
F-75116 Paris (FR)**

EP 0 359 663 B1

**Description**

La présente invention concerne de façon générale un système de positionnement d'un premier objet par rapport à un second objet, et plus particulièrement, un système d'aide à l'appontage d'aéronefs à vol stationnaire sur plate-forme de navire.

L'appontage d'un hélicoptère, il pourrait aussi s'agir d'un avion capable de vol stationnaire, sur la plate-forme d'un bâtiment de la marine, à priori autre qu'un porte-hélicoptères, s'effectue en positionnant l'aéronef à une hauteur déterminée, généralement un à deux mètres, au-dessus d'une grille de la plate-forme, de deux à trois mètres de diamètres, en larguant de l'appareil un harpon, ou crosse, pour l'accrocher à la grille et en enroulant sur un treuil un câble au bout duquel est fixé le harpon pour tirer l'hélicoptère vers la plate-forme, ou le pont, du bâtiment, avant de le plaquer dessus.

Depuis une distance de quelques miles nautiques, environ deux, jusqu'à l'extrémité du bâtiment, l'hélicoptère est guidé sur un plan de descente sans difficultés, à l'aide de dispositifs optiques du type VASIS (Visual approach slope indicator system, ou indicateur visuel de pente d'approche). Jusqu'alors, les mouvements du bâtiment ne sont pas importants. Ils le deviennent ensuite, en phase finale d'appontage, le harpon ne devant pas être largué en dehors de la grille, et l'aéronef devant se poser à plat sur la plate-forme. Or le pilote ne voit pas sous son appareil.

Pour résoudre cette difficulté, il est fait appel, d'une part, à un officier d'appontage ou "batman", et, d'autre part, à une barre de référence horizontale (BRH) fixée en partie haute d'un hangar érigé sur la plate-forme et que le pilote peut voir, la barre étant asservie pour rester horizontale et le pilote ne posant son appareil que lorsque cette barre est parallèle au sommet du hangar.

La difficulté n'est toutefois qu'en partie résorbée. La barre BRH certes fournit une référence de roulis et le batman aide le pilote comme il peut. Mais ce n'est pas pleinement satisfaisant. Le pilote ne connait pas son altitude exacte au-dessus de la plate-forme-la sonde altimétrique est hors d'usage à cause des masses magnétiques et le pilonnement du navire peut être important - ni la distance de son appareil au hangar, qui doit rester suffisante pour le débattement des pales, et il ne dispose pas de références de site, de tangage et de lacet - le compas magnétique est tout autant perturbé que la sonde par les masses magnétiques -. Bref, la qualité et la précision de l'appontage dépendent trop du batman.

La présente invention vise à pallier cet inconvénient.

On connaît déjà, par le document FR-A-2 569 838, un système de positionnement d'un premier objet par rapport à un second objet, comportant des moyens d'émission d'un faisceau de particules, sur l'un des deux objets, des moyens sensibles, sur l'autre des deux objets, pour recevoir les particules du faisceau selon une section par le second objet, et des moyens pour, dans un repère lié au second objet, déterminer cette section et, à partir de celle-ci, des informations de positionnement.

Toutefois ce système connu est un système d'aide à l'amarrage d'un engin spatial actif sur un autre engin spatial passif. Il ne peut pas convenir pour l'appontage d'aéronefs sur plate-forme de navire. En effet, ce système est essentiellement basé sur un élément d'obscurcissement embarqué sur l'engin passif et qui est en saillie hors de la surface de celui-ci. Si on adoptait un tel système pour l'appontage d'aéronefs sur plate-forme de navire, ou bien les aéronefs ne pourraient pas apponter ou bien ils risqueraient de détruire l'élément d'obscurcissement rendant donc le système inexploitable.

La demanderesse, tout en s'inspirant de cette solution d'aide à l'amarrage d'engins spatiaux, a donc recherché une solution d'aide à l'appontage évitant de faire appel à un batman et c'est ainsi qu'elle propose son invention.

La présente invention concerne un système d'aide à l'appontage, en phase finale, sur la plate-forme d'un navire, d'un aéronef à vol stationnaire comportant des moyens d'émission d'un faisceau de particules conique d'angle d'ouverture donné, comprenant des moyens sensibles, sur la plate-forme, pour recevoir les particules du faisceau selon une section par la plate-forme, des moyens, sur la plate-forme, pour, dans un repère lié à la plate-forme, déterminer cette section et, à partir de celle-ci, des informations d'appontage, et des moyens de visualisation des informations d'appontage desdits moyens de détermination.

De préférence,
- le faisceau de particules est un faisceau lumineux et les moyens de réception des moyens photosensibles,
- le repère a pour origine le centre d'une grille d'appontage,
- les moyens photosensibles comprennent des cellules photosensibles disposées le long des branches, avantageusement six, d'une croix aussi avantageusement centrée sur l'origine du repère,
- les moyens d'émission du faisceau lumineux sont agencés pour émettre un faisceau conique de révolution et d'ouverture et d'axe, de préférence confondu avec la verticale de l'aéronef, tels que la section du faisceau par la plate-forme soit une ellipse.

Le faisceau lumineux peut être émis en lumière visible ou non, par exemple en infrarouge par une source laser ; il peut être creux ou plein ; étant entendu que dans ce dernier cas, c'est le contour de la trace du faisceau sur la plate-forme qui permet de déterminer les informations d'appontage. On notera qu'au lieu d'un faisceau lumineux, un faisceau électromagnétique, de préférence de fréquence sensiblement comprise entre environ 30 et 60 GHz, pourrait être émis.

Alors que c'est bien le problème de l'appontage des hélicoptères qui est à l'origine de la présente invention, la demanderesse n'entend pas pour autant la limiter à ce domaine d'utilisation.

La présente invention concerne donc, de façon plus générale, un système de positionnement d'un premier objet par rapport à un second objet, comportant des moyens d'émission d'un faisceau de particules conique d'angle d'ouverture donné, sur le premier objet, des moyens sensibles, sur le second objet, pour recevoir les particules du faisceau selon une section par le second objet, des moyens, sur le second objet, pour, dans un repère lié au second objet, déterminer cette section et, à partir de celle-ci, des informations de positionnement, et des moyens, sur le second objet, de visualisation des informations de positionnement desdits moyens de détermination.

L'invention peut ainsi trouver aussi une bonne application par exemple dans le domaine de la machine-outil.

L'invention sera mieux comprise à l'aide de la description suivante du système d'aide à l'appontage de l'invention, en référence aux dessins annexés, sur lesquels

- la figure 1 représente la section d'un cône de révolution par un plan;
- la figure 2 représente une vue schématique illustrant la mise en oeuvre du système de l'invention, entre un hélicoptère et la plate-forme d'un navire; et

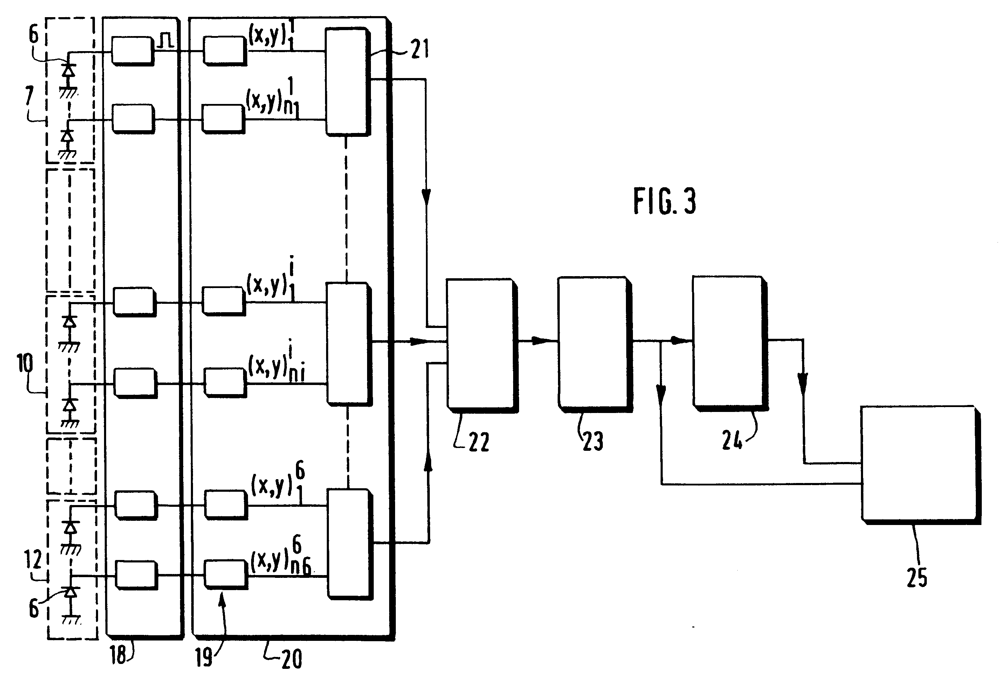

- la figure 3 représente schématiquement les blocs de l'unité de traitement du système de la figure 2.

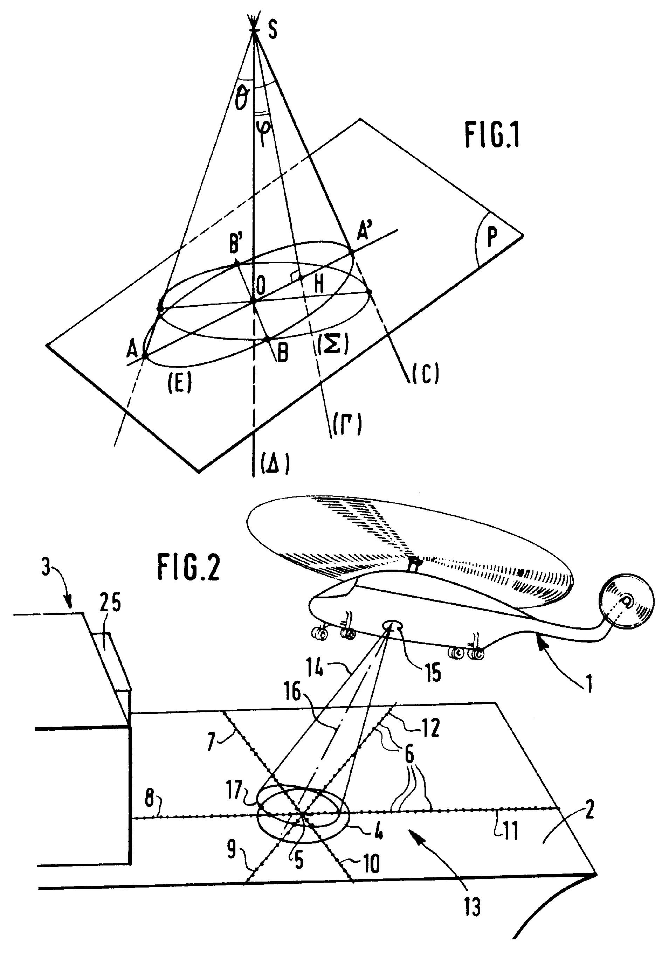

Commençons par démontrer, en référence à la figure 1, comment, à partir de l'équation d'une ellipse (E), section par un plan (P) d'un cône de révolution (C) d'angle d'ouverture donné $2\theta$, on peut déterminer l'angle $\varphi$ compris entre l'axe ($\Delta$) du cône et la perpendiculaire ($\Gamma$) au plan (P) passant par le sommet S du cône, ainsi que la distance SH du sommet du cône (C) au plan (P).

Soit donc, dans le plan (P) coupant le cône (C), l'ellipse (E), intersection des deux surfaces d'équation, dans un repère orthonormé (x, y),

$$p_1x^2 + p_2y^2 + p_3xy + p_4x + p_5y + p_6 = 0 \quad (1)$$

On détermine la rotation et la translation rectiligne du repère x, y, auxquelles il faut procéder pour obtenir l'équation réduite de l'ellipse (E)

$$\frac{X^2}{a^2} + \frac{Y^2}{b^2} - 1 = O \quad (2)$$

2a et 2b étant les longueurs du grand axe et du petit axe de l'ellipse, dans le repère orthonormé (X, Y) avant le centre O de l'ellipse (E) pour origine, son axe focal pour axe X'OX et son axe non focal pour axe Y'OY. Disposant de six paramètres connus ($p_1$-$p_6$), et une translation linéaire et une rotation étant chacune déterminée par deux paramètres, on a donc à résoudre un système de six équations à six inconnues pour déterminer les axes de l'ellipse (E) qui sont deux autres de ces six inconnues.

Ayant donc déterminé les longueurs 2a et 2b du grand axe AA' et du petit axe BB' de l'ellipse (E), et la droite ($\Gamma$) coupant le plan (P) au point H situé sur le grand axe AA', on peut écrire, en posant SH = Z, AH = T et A'H = U,

$$tg(\theta - \varphi) = \frac{U}{Z}$$

$$tg(\theta + \varphi) = \frac{T}{Z}$$

$$\frac{U+T}{Z} = \frac{2a}{Z} = tg(\theta + \varphi) + tg(\theta - \varphi)$$

$$2a = Z\left(\frac{tg\,\vartheta + tg\,\varphi}{1 - tg\,\vartheta\,tg\,\varphi} + \frac{tg\,\vartheta - tg\,\varphi}{1 + tg\,\vartheta\,tg\,\varphi}\right) \quad (3)$$

La section du cône (C) par le plan perpendiculaire à ($\Delta$) passant par O est un cercle ($\Sigma$) de rayon R égal à la moitié b du petit axe de l'ellipse (E), le cercle ($\Sigma$) et l'ellipse (E) se coupant suivant le petit axe BB' de l'ellipse (E).

On peut alors écrire

$$tg\ \theta\ =\ \frac{R}{OS}$$

$$OS\ =\ \frac{R}{tg\theta}$$

$$Z\ =\ OS\ \cos\varphi$$

$$Z\ =\ \frac{R\cos\varphi}{tg\ \theta}$$

$$Z\ =\ \frac{b\cos\varphi}{tg\ \theta}\quad(4)$$

Si on pose tg $\varphi$ = A et tg $\theta$ = C, on a, en considérant l'équation (3)

$$2a\ =\ Z\left(\frac{A+C}{1-AC}\ +\ \frac{C-A}{1+AC}\right)$$

$$2a\left[(1+AC)(1-AC)\right]\ =\ Z\left[(A+C)(1+AC)+(C-A)(1-AC)\right]\quad(5)$$

Si on pose $tg\frac{\varphi}{2}$ = $\psi$, alors

$$\cos\frac{\varphi}{2}\ =\ \frac{1-\psi^2}{1+\psi^2}$$

$$tg\ \varphi\ =\ \frac{2\ \psi}{1-\ \psi^2}$$

$$A\ =\ \frac{2\ \psi}{1-\psi^2}\quad(6)$$

Si on reporte la valeur de A, exprimée par la relation (6), dans l'équation (5), a et c étant connus, on obtient une équation en $\psi$ du sixième degré.

Par une méthode numérique approchée (méthode de Newton, par dichotomie,...) on en détermine facilement $\psi$ et donc l'angle $\varphi$.

On en déduit Z par l'équation (4).

Le système d'aide à l'appontage peut maintenant être abordé. Il s'agit d'un système destiné à permettre l'appontage correct, par exemple d'un hélicoptère 1 sur le pont, ou la plate-forme 2, d'un navire 3, par exemple d'un escorteur.

Le système comporte une partie embarquée, à bord de l'hélicoptère, et une partie fixe, à bord du navire.

La partie fixe comprend une grille d'appontage classique, de centre 5, implantée sur la plate-forme 2 et symbolisée par son contour extérieur 4 sur la figure 2, des diodes photo-sensibles 6, également implantées sur la plate-forme, destinées à recevoir le rayonnement d'une source montée sur l'hélicoptère et dont il va être question plus loin, une unité de traitement et, ici, une unité de visualisation. Les cellules photo-sensibles 6, de coordonnées respectives déterminées, en partie noyées dans la plate-forme, seule leur fenêtre de réception faisant saillie hors de celle-ci, sont disposées suivant un intervalle régulier le long de six branches rectilignes 7-12 décalées angulairement de 60° d'une croix 13 centrée sur le centre 5 de la grille d'appontage 4. Les diodes sont implantées jusqu'aux bords de la plate-forme.

La partie embarquée comporte une source d'émission, à travers la partie inférieure 15 de la carlingue de l'hélicoptère, d'un faisceau lumineux 14, ici plein, conique de révolution, d'axe confondu avec la verticale 16 de l'hélicoptère et d'angle d'ouverture 2$\theta$ donné.

Il s'agit en l'occurrence d'un générateur laser émettant dans le domaine infra-rouge, avec son optique associée; les cellules 6 sont des diodes infra-rouge tout aussi classiques, par exemple en HgCdTe.

Pour ne pas subir les perturbations de rayonnements ambiants, le générateur est modulé ici à une fréquence de 800 Hz, obtenue par redressement de deux alternances de la fréquence de bord de 400 Hz.

Le faisceau 14 éclaire la plate-forme 2 et illumine les diodes 6 selon une trace à contour elliptique 17.

L'unité de traitement, à partir des coordonnées des diodes 12 illuminées situées sur l'ellipse 17, ou des plus proches de ce contour, dispose donc des coordonnées de six points de l'ellipse, à l'erreur de mesure près pouvant donc être égale au pas des diodes 12, à partir desquelles vont pouvoir être élaborées les informations d'appontage.

Les signaux délivrés par les diodes 6 illuminées des six branches 7-12, en contenant, chacune, $n_i$ (i = 1....

6), sont filtrés et mis en forme dans un module 18 pour la lecture de mémoires 19 d'un module 20 fournissant les coordonnées $(x, y)^i$ de celles des $n_i$ cellules, pour la ième branche, qui sont illuminées. Six circuits 21, du module 20, en tirent et délivrent les couples de coordonnées maximales des six groupes de diodes, respectivement. Les coordonnées ainsi extraites, à la sortie du module 20, ont été établies dans un repère orthonormé lié à la plate-forme et ayant le centre de la grille d'appontage comme origine, l'axe longitudinal du navire pour axe x'Ox, et l'axe transversal du navire pour axe y'oy.

Dans le module 22, qui reçoit donc les coordonnées de six points de l'ellipse 17, et en référence à l'équation (1) ci-dessus, l'ellipse étant définie par six paramètres, il est résolu le système de six équations à six inconnues qui donne les paramètres $p_1$-$p_6$ de l'ellipse.

On notera qu'on pourrait procéder au calcul de l'équation de l'ellipse avec moins de six points, donc moins de six branches, mais, bien sûr, au détriment de la précision.

Il est procédé dans le module 23, à un changement de repère, par rotation et translation rectiligne, pour calculer l'équation de l'ellipse 17 dans le repère orthonormé ayant son centre pour origine, son axe focal pour axe X'OX, et son axe non focal pour axe Y'OY, et en déterminer, dans le repère lié à la plate-forme
- les coordonnées du centre de l'ellipse,
- l'orientation de l'ellipse,
- les longueurs du grand axe et du petit axe de l'ellipse.

En référence au passage ci-dessus décrivant la figure 1, il est procédé dans le module 24 à la détermination de l'inclinaison $\varphi$ du faisceau 14 sur la verticale de la plate-forme 2, c'est-à-dire l'inclinaison de l'axe du faisceau sur la verticale du plan de l'ellipse, c'est-à-dire l'angle de présentation de l'appareil, et de l'altitude Z de l'hélicoptère au-dessus de la plate-forme.

Les informations délivrées par les modules 23 et 24 sont transmises à l'unité de visualisation 25 et visualisées à l'attention du pilote de l'hélicoptère. Il peut par exemple s'agir d'un tableau d'ampoules de couleurs, disposé à bord de l'hélicoptère et indiquant au pilote que son appareil est trop haut, trop bas, trop à droite, qu'il est mal orienté, qu'il n'est pas horizontal, ou qu'il peut procéder au largage du harpon d'appontage. Il peut aussi s'agir d'un tableau disposé à bord de l'hélicoptère, combiné à un système de transmission classique.

## Revendications

1. Système de positionnement d'un premier objet (1) par rapport à un second objet (2), comportant des moyens d'émission d'un faisceau de particules conique d'angle d'ouverture donné (14), sur le premier objet (1), des moyens sensibles (6), sur le second objet (2), pour recevoir les particules du faisceau (14) selon une section (17) par le second objet (2), des moyens (20-24), sur le second objet (2), pour, dans un repère lié au second objet (2), déterminer cette section (17) et, à partir de celle-ci , des informations de positionnement, et des moyens (25), sur le second objet (2), de visualisation des informations de positionnement desdits moyens de détermination (20-24).

2. Système d'aide à l'appontage, en phase finale, sur la plate-forme (2) d'un navire (3), d'un aéronef à vol stationnaire (1) comportant des moyens d'émission d'un faisceau de particules conique d'angle d'ouverture donné (14), comprenant des moyens sensibles (6), sur la plate-forme (2), pour recevoir les particules du faisceau (14) selon une section (17) par la plate-forme (2), des moyens (20-24), sur la plate-forme (2), pour, dans un repère lié à la plate-forme (2), déterminer cette section (17) et, à partir de celle-ci, des informations d'appontage, et des moyens (25) de visualisation des informations d'appontage desdits moyens de détermination (20-24).

3. Système selon l'une des revendications 1 et 2, dans lequel lesdits moyens d'émission émettent un faisceau lumineux (14) et lesdits moyens sensibles sont des moyens photo-sensibles (6).

4. Système selon l'une des revendications 1 à 3, dans lequel lesdits moyens de détermination (20-24) sont agencés pour déterminer, à partir de la section (17) du faisceau (14), la distance du sommet du faisceau au plan (2) de cette section.

5. Système selon l'une des revendications 1 à 4, dans lequel lesdits moyens d'émission du faisceau (14) sont agencés pour émettre un faisceau conique de révolution.

6. Système selon la revendication 5, dans lequel lesdits moyens de détermination (20-24) sont agencés pour déterminer l'inclinaison de l'axe (16) du faisceau (14) sur la verticale du plan (2) de ladite section (17).

7. Système selon l'une des revendications 2 à 6, dans lequel ledit repère a pour origine le centre (5) d'une grille d'appontage (4).

8. Système selon l'une des revendications 3 à 7, dans lequel lesdits moyens photo-sensibles comprennent des cellules photo-sensibles (6) disposées le long des branches (7-12) d'une croix.

9. Système selon l'une des revendications 5 à 8, dans lequel lesdits moyens d'émission sont agencés pour émettre un faisceau (14) d'axe (16) et d'ouverture tels que ladite section soit une ellipse (17).

**Patentansprüche**

1. System zur Positionierung eines ersten Objektes (1) in bezug auf ein zweites Objekt (2), umfassend Mittel zur Aussendung eines kegelförmigen Teilchenstrahlenbündels mit einem bestimmten Öffnungswinkel (14), auf dem ersten Objekt (1), empfindliche Mittel (6), auf dem zweiten Objekt (2), um die Teilchen des Strahlenbündels (14) gemäß einem Querschnitt (17) durch den zweiten Objekt (2) zu empfangen, Mittel (20-24), auf dem zweiten Objekt (2), um, in einem an das zweite Objekt (2) gebundenen Bezugssystem, diesen Querschnitt (17) zu bestimmen und hieraus Informationen für die Positionierung zu ermitteln, und Mittel (25), auf dem zweiten Objekt (2), zur Sichtdarstellung der positioninformationen der Mittel zur Bestimmung (20-24).

2. System zum Erleichtern der letzten Phase der Landung eines in der Standschwebe befindlichen Luftfahrzeugs (1) auf einem Plattformdeck (2) eines Schiffs (3), wobei das Luftfahrzeug Mittel zur Aussendung eines kegelförmigen Teilchenstrahlenbündels mit einem bestimmten Öffnungswinkel (14) aufweist, welches System empfindliche Mittel (6) auf dem Plattformdeck (2), um die Teilchen des Strahlenbündels (14) gemäß einem Querschnitt (17) durch das Plattformdeck (2) zu empfangen, Mittel (20-24), auf dem Plattformdeck (2), um, in einem an das Plattformdeck (2) gebundenen Bezugssystem, diesen Querschnitt (17) zu bestimmen und hieraus Informationen für die Landung zu ermitteln, und Mittel (25) zur Sichtdarstellung der Landeinformationen der Mittel zur Bestimmung (20-24) umfaßt.

3. System nach einem der Ansprüche 1 und 2, bei dem die Mittel zur Aussendung ein Lichtstrahlenbündel (14) aussenden und die empfindlichen Mittel lichtempfindliche Mittel (6) sind.

4. System nach einem der Ansprüche 1 bis 3, bei dem die Mittel zur Bestimmung (20-24) vorgesehen sind, um anhand des Querschnitts (17) des Strahlenbündels (14) den Abstand des Scheitels des Strahlenbündels von der Ebene (2) dieses Querschnitts zu bestimmen.

5. System nach einem der Ansprüche 1 bis 4, bei dem die Mittel zur Aussendung des Strahlenbündels (14) vorgesehen sind, um ein kreiskegelförmiges Strahlenbündel auszusenden.

6. System nach Anspruch 5, bei dem die Mittel zur Bestimmung (20-24) vorgesehen sind, um die Neigung der Achse (16) des Strahlenbündels (14) in bezug auf die Vertikale der Ebene (2) des Querschnitts (17) zu ermitteln.

7. System nach einem der Ansprüche 2 bis 6, bei dem der Ursprung des Bezugssystem der Mittelpunkt (5) eines Landerasters (4) ist.

8. System nach einem der Ansprüche 3 bis 7, bei dem die lichtempfindlichen Mittel lichtempfindliche Zellen (6) umfassen, die entlang der Arme (7-12) eines Kreuzes angeordnet sind.

9. System nach einem der Ansprüche 5 bis 8, bei dem die Mittel zur Aussendung vorgesehen sind, um ein Strahlenbündel (14) mit einer solchen Achse (16) und einer solchen Öffnung auszusenden, daß der Querschnitt eine Ellipse (17) ist.

**Claims**

1. System for positioning a first object (1) with respect to a second object (2), comprising means for emitting a conical beam of particles having a given angular aperture (14), on the first object (1), sensitive means (6), on the second object (2), for receiving the particles of the beam (14) according to a cross-section (17) by the second object (2), means (20-24), on the second object (2), for determining said cross-section (17) with respect to a reference connected to the second object (2), and, from said cross-section, positioning data, and means (25), on the second object (2), for displaying positioning data from said determining means (20-24).

2. System for assisting the landing, in its final stage, of a hovering aircraft (1) on the platform (2) of a vessel (3), comprising means for emitting a conical beam of particles having a given angular aperture (14), comprising sensitive means (6) on the platform for receiving the particles of the beam (14) according to a cross-section (17) by the platform (2), determining means (20-24) on the platform (2) for determining said cross-section (17) with respect to a reference connected to said platform (2) and, from said cross-section landing data, and means (25) for displaying landing data from said determining means (20-24).

3. System as claimed in one of claims 1 and 2, in which said emitting means emits a light beam (14) and said sensitive means are photosensitive means (6).

4. System as claimed in one of claims 1 to 3, in which said determining means (20-24) are arranged for determining, from the cross-section (17) of the beam (14), the distance from the apex of the beam to the plane (2) of said cross-section.

5. System as claimed in one of claims 1 to 4, in which said beam emitting means (14) are arranged for emitting a conical beam of revolution.

6. System as claimed in claim 5, in which said determining means (20-24) are arranged for determining the inclination of the axis (16) of the beam (14) to the vertical of the plane (2) of said cross-section (17).

7. System as claimed in one of claims 2 to 6, in which said reference has as its origin the centre (5) of a landing grid (4).

8. System as claimed in one of claims 3 to 7, in which said photosensitive means comprise photosensitive cells (6) arranged along the arms (7-12) of a cross.

9. System as claimed in one of claims 5 to 8, in which said emitting means are arranged for emitting a beam (14) with an axis (16) and an aperture such that said cross-section is an allipse (17).

EP 0 359 663 B1

FIG.1

FIG.2

8

FIG. 3

EP 0 359 663 B1